# EUROPÄISCHE PATENTSCHRIFT

(11) **EP 1 843 175 B1**
(45) Veröffentlichungstag und Bekanntmachung des Hinweises auf die Patenterteilung: **20.01.2010**
(21) Anmeldenummer: 07005821.9
(22) Anmeldetag: 21.03.2007
(51) Int. Cl.: G01V 8/12

(54) **Synchronisationsverfahren für eine Lichtschranke und entsprechenden Lichtschranke**
Synchronisation method for a light barrier and corresponding light barrier
Procédé de synchronisation pour une barrière lumineuse et barrière lumineuse correspondante

(30) Priorität: 05.04.2006 DE 102006016027
(43) Veröffentlichungstag der Anmeldung: 10.10.2007
(73) Patentinhaber: SICK AG, 79183 Waldkirch (DE)
(72) Erfinder: Merettig, Gerhard, 79350 Sexau (DE)
(74) Vertreter: Manitz, Finsterwald & Partner GbR

(56) Entgegenhaltungen:
- EP-A- 1 248 077
- DE-A1- 4 323 910
- DE-A1- 19 924 351
- DE-C1- 19 720 176
- US-A- 5 532 472

## Beschreibung

Die vorliegende Erfindung betrifft ein Verfahren zum Synchronisieren eines Empfängers einer Lichtschranke mit einem Sender der Lichtschranke. Die Erfindung betrifft ferner eine entsprechende Lichtschranke.

Eine Lichtschranke besitzt generell einen Sender, der Sendelichtpulse aussendet, zum Beispiel sichtbares oder infrarotes Licht. Die Sendelichtpulse besitzen einen bestimmten Pulsabstand zueinander und eine jeweilige Sendepulsdauer. Ein zugeordneter Empfänger empfängt diese Sendelichtpulse und erzeugt entsprechende elektrische Empfangssignale. Sofern die optische Verbindungsstrecke zwischen dem Sender und dem Empfänger durch ein Hindernis unterbrochen wird und demzufolge die Sendelichtpulse vom Empfänger nicht mehr detektiert werden können, soll dies von einer zugeordneten Auswerteeinrichtung erkannt werden können, um ein entsprechendes negatives Schaltsignal zu erzeugen.

Um hinsichtlich der vom Empfänger erzeugten Empfangssignale danach unterscheiden zu können, ob diese tatsächlich den Sendelichtpulsen des Senders entsprechen oder - trotz unterbrochener optischer Verbindungsstrecke - durch Störsignalpulse beispielsweise des Umgebungslichts hervorgerufen werden, müssen der Empfänger und der Sender miteinander synchronisiert werden. Besonders wichtig ist diese Synchronisierung insbesondere bei solchen Lichtschranken, bei denen der Sender und der Empfänger auf unterschiedlichen Seiten des Überwachungsbereichs in einer Gegenüberstellung angeordnet sind (Einweg-Lichtschranken) und nicht unbedingt eine elektrische Verbindung zwischen dem Pulsgenerator des Lichtsenders und der dem Empfänger zugeordneten Auswerteeinrichtung besteht.

DE 197 20 176 C1 beschreibt ein Verfahren zur Elimination von Störsignälen bei einer Lichtschranke. Während einer Periode T wird eine Folge von Lichtpulsen ausgesendet, denen eine Sendepause T_{P} folgt. Während einer vorgegebenen Zeitspanne T_{E} wird die Anzahl der empfangenen Pulse gezählt. In Abhängigkeit der Zahl der empfangenen Lichtpulse wird der Lichtweg als frei oder nicht frei klassifiziert. Wird durch einen Störlichtimpuls das Zählfenster T_{E} geöffnet, wird in dem Zeitintervall T_{E} nur der Störlichtimpuls gemessen, da in der Sendepause T_{P} keine Sendelichtpulse ausgesendet werden. Es wird also eine kleinere Anzahl von Lichtpulsen gezählt als erwartet und der Störlichtimpuls als solcher identifiziert. In Abhängigkeit von der erkannten Pulszahl wird freigeschaltet oder nicht.

Bei einer Anordnung der DE 43 23 910 A1 werden die aufgrund einer Folge von ausgesendeten Lichtpulsen am Empfänger empfangenen Lichtpulse gezählt und ausgewertet. Die Anzahl der gezählten Pulse wird mit vorgebbaren Sollwerten verglichen.

Es sind einfache Synchronisationsverfahren bekannt, bei denen ein gefiltertes Empfangssignal ausgewertet wird, das oberhalb einer definierten Schwelle liegt. So genannte Zeitfenster-Verfahren überprüfen, ob innerhalb eines definierten Zeitfensters nach Empfang eines Empfangssignals, das eine definierte Schwelle überschritten hat, ein weiterer Sendelichtpuls detektiert wird. Aufwendigere Synchronisationsverfahren führen eine Differenzierung des Empfangssignals durch, um eine Pulsformanalyse vornehmen zu können. Die bekannten einfachen Synchronisationsverfahren neigen jedoch dazu, Störsignale als echte Sendelichtpulse zu interpretieren. Bei den genannten Zeitfenster-Verfahren kann ein Störsignal zu Beginn des Zeitfensters zur Desychronisation führen und somit ein unerwünschtes negatives Schaltsignal auslösen. Auch die aufwendigen Pulsformanalyse-Verfahren können zu Fehldetektionen führen, insbesondere wenn das Störsignal hohe Frequenzanteile erhält.

Es ist eine Aufgabe der Erfindung, für eine Lichtschranke ein einfaches Synchronisationsverfahren mit geringer Störanfälligkeit zu schaffen.

Diese Aufgabe wird durch ein Verfahren mit den Merkmalen des Anspruchs 1 gelöst, und insbesondere dadurch, dass die Empfangssignale in aufeinander folgenden Integrationsfenstern integriert werden, um einen jeweiligen Integrationswert zu ermitteln, wobei die ermittelten Integrationswerte mit einer erwarteten Folge von Sendelichtpulsen verglichen werden.

Bei dem erfindungsgemäßen Synchronisationsverfahren werden die Empfangssignale also fortlaufend aufintegriert, und zwar während aufeinander folgender Integrationsfenster von vorbestimmter Länge (insbesondere konstanter Länge). Hierdurch wird im Takt der Integrationsfenster eine Folge von Integrationswerten erzeugt. Diese Folge von ermittelten Integrationswerten wird direkt oder indirekt - d.h. nach weiterer Signalverarbeitung, zum Beispiel Summenbildung - mit einer erwarteten Folge von ausgesendeten Sendelichtpulsen verglichen. Mit anderen Worten wird eine vorbestimmte Anzahl von aufeinander folgend erzeugten Integrationswerten mit einer Folge von nacheinander ausgesendeten Sendelichtpulsen korreliert, wobei diese Folge von Sendelichtpulsen empfängerseitig bekannt ist und der Auswertung der ermittelten Integrationswerte deshalb als erwarteter Wert zugrunde gelegt werden kann. In Abhängigkeit von dem Ergebnis dieses Vergleichs wird entweder ein positives Schaltsignal erzeugt, nämlich wenn eine hinreichende vorbestimmte Übereinstimmung der Folge von ermittelten Integrationswerten mit der erwarteten Folge von Sendelichtpulsen festgestellt wird, oder es wird ein negatives Schaltsignal erzeugt, nämlich wenn keine hinreichende Korrelation zwischen der ermittelten Folge von Integrationswerten und der erwarteten Folge von Sendelichtpulsen festgestellt wird.

Somit wird bei diesem Verfahren zwar der vermeintliche Nachteil in Kauf genommen, dass die Information über die genaue zeitliche Lage und über die Pulsform bzw. den Pegel des Empfangssignals unterdrückt wird. Außerdem besitzt dieses Verfahren den Nachteil, dass ein empfangener Sendelichtpuls auf mehrere Integrationsfenster verteilt sein kann. Allerdings besitzt das erfindungsgemäße Synchronisationsverfahren eine verbesserte Störanfälligkeit insbesondere gegenüber hochfrequenten Störsignalen, und die ermittelten Integrationswerte bieten dennoch die Möglichkeit einer Korrelierung mit der erwarteten Folge von Sendelichtpulsen im Takt der vorbestimmten Integrationsfenster, so dass eine robuste und gleichwohl einfache Synchronisation des Empfängers auf einen externen Sender möglich ist.

Die beschriebene Integration der Empfangssignale innerhalb der Integrationsfenster kann durch einen rücksetzbaren Integrator oder durch einen permanent arbeitenden Integrator mit nachfolgender Differenzbildung realisiert werden (Subtraktion des Signals zu Beginn des Integrationsfensters von dem Signal am Ende des Integrationsfensters). Der Integrator kann analog oder digital verwirklicht sein. Ein Tiefpass mit entsprechend niedriger Grenzfrequenz wirkt beispielsweise ebenfalls integrierend. Wichtig ist eine definierte zeitliche Begrenzung der Integration, um mehrere aufeinander folgende Integrationsfenster zu bilden, wobei hierunter ein Zeitintervall zu verstehen ist, während dessen das Empfangssignal aufintegriert wird.

Gemäß einer bevorzugten Ausführungsform ist eine besonders einfache Korrelierung der ermittelten Integrationswerte mit der erwarteten Folge von Sendelichtpulsen möglich, wenn die ermittelten Integrationswerte noch vor dem Vergleich mit den erwarteten Sendelichtpulsen diskretisiert, und zwar insbesondere binarisiert werden. Hierdurch kann fortlaufend ein Bitstrom erzeugt werden, der mit der erwarteten Folge von Sendelichtpulsen auf Übereinstimmung verglichen werden kann. Mit anderen Worten werden die Integrationswerte in diesem Fall binarisiert, um im Takt der aufeinander folgenden Integrationsfenster den genannten Bitstrom zu erzeugen. Eine derartige Binarisierung der ermittelten Integrationswerte erfolgt vorzugsweise durch einen Vergleich mit wenigstens einem vorbestimmten Schwellwert.

Alternativ hierzu können die ermittelten Integrationswerte jedoch auch in analoger Form mit den erwarteten Sendelichtpulsen korreliert werden.

Für den erläuterten Vergleich der ermittelten Integrationswerte mit der erwarteten Folge von Sendelichtpulsen wird vorzugsweise eine ausgewählte Folge von ermittelten Integrationswerten relativ zu der erwarteten Folge von Sendelichtpulsen um eine oder mehrere verschiedene Zeitabstände versetzt, um einen jeweiligen Übereinstimmungsgrad zwischen den beiden Folgen zu bestimmen und um hierbei eine eventuelle Phasendifferenz zwischen den beiden Folgen zu kompensieren. Hierbei kann beispielsweise der höchste ermittelte Übereinstimmungsgrad für die weitere Auswertung berücksichtigt werden.

Weiterhin ist es bevorzugt, wenn die Auswertung der ermittelten Integrationswerte dahingehend erfolgt, dass ein positives Schaltsignal erzeugt wird, falls der Vergleich der ermittelten Integrationswerte mit der erwarteten Folge von Sendelichtpulsen eine vorbestimmte Mindestübereinstimmung ergibt. Beispielsweise kann ein positives Schaltsignal (Synchronisation EIN) festgestellt werden, wenn innerhalb eines vorbestimmten Zeitintervalls für jedes Integrationsfenster, für das ein Sendelichtpuls erwartet wird, der tatsächlich ermittelte Integrationswert auch einem empfangenen Sendelichtpuls entspricht, wobei andernfalls ein negatives Schaltsignal erzeugt wird (Synchronisation AUS). Das betrachtete vorbestimmte Zeitintervall beträgt vorzugsweise ein Vielfaches des Pulsabstands zwischen zwei aufeinander folgenden Sendelichtpulsen.

Um eine besonders geringe Störanfälligkeit zu erreichen, ist es bevorzugt, wenn die Umschaltregeln für das Umschalten zwischen einem positiven und einem negativen Schaltsignal in Abhängigkeit von dem aktuellen Schaltzustand gewählt werden. Mit anderen Worten sollen in dem Fall, dass bereits ein positives Schaltsignal vorliegt, für das Beibehalten des positiven Schaltsignals andere Kriterien berücksichtigt werden als für ein Umschalten von einem negativen Schaltsignal auf ein positives Schaltsignal. Umgekehrt können auch in dem Fall, dass bereits ein negatives Schaltsignal vorliegt, für das Beibehalten dieses negativen Schaltsignals andere Kriterien berücksichtigt werden als für ein Umschalten von einem positiven Schaltsignal auf ein negatives Schaltsignal. Beispielsweise können je nach aktuellem Schaltzustand unterschiedliche Schwellwerte zur Bewertung des Korrelationsergebnisses herangezogen werden, zum Beispiel eine unterschiedliche Anzahl von Integrationswerten innerhalb eines vorbestimmten Zeitintervalls, die einem erwarteten Sendelichtpuls entsprechen müssen. Beispielsweise können auch für die erläuterte Binarisierung der Integrationswerte in Abhängigkeit von dem aktuellen Schaltzustand unterschiedliche Schwellwerte berücksichtigt werden.

Was die jeweilige Dauer der aufeinander folgenden Integrationsfenster betrifft, so entspricht diese vorzugsweise ungefähr der Sendepulsdauer der ausgesendeten Sendelichtpulse, wobei die Dauer eines Integrationsfensters beispielsweise einen Wert zwischen einem Viertel bis zu dem 4-fachen der Sendepulsdauer besitzen kann. Besonders vorteilhafte Möglichkeiten zur Auswertung der ermittelten Integrationswerte bestehen, wenn die Dauer eines Integrationsfensters der Hälfte der Sendepulsdauer, genau der Sendepulsdauer oder der doppelten Sendepulsdauer entspricht. Sofern die Dauer eines Integrationsfensters ungefähr der Sendepulsdauer entspricht, können die aufintegrierten Empfangssignale durch Diskretisierung nach Zeit und/oder Amplitude besonders gut mit den entsprechenden Sendelichtpulsen korreliert werden.

Ferner ist es bevorzugt, wenn die Frequenz, mit der die aufeinander folgenden Integrationsfenster erzeugt werden, einem ganzzahligen Vielfachen der Aussendefrequenz der Sendelichtpulse entspricht. Mit anderen Worten soll die Dauer eines Integrationsfensters einen ganzzahligen Bruchteil des Pulsabstands der Sendelichtpulse betragen. Hierdurch vereinfacht sich die Auswertung, da zwischen der Folge von Sendelichtpulsen und den ermittelten Integrationswerten generell lediglich eine Phasenverschiebung vorliegen kann. Da diese Phasenverschiebung sich durch Drifteffekte gleichwohl allmählich ändern kann, ist es jedoch bevorzugt, wenn das erläuterte Synchronisieren des Empfängers mit dem Empfänger während der gesamten Dauer eines Überwachungsbetriebs der Lichtschranke fortgesetzt wird.

Alternativ zu der vorgenannten vereinfachten Frequenzwahl ist es auch möglich, dass die Sendelichtpulse nicht äquidistant, sondern in unterschiedlichen Pulsabständen gesendet werden. Sofern das diesbezügliche Sendemuster der empfängerseitigen Auswerteeinrichtung bekannt ist, können die ermittelten Integrationswerte gleichwohl mit einer erwarteten Folge von Sendelichtpulsen korreliert werden, wobei eine verbesserte Störanfälligkeit gegenüber Störquellen mit konstanter Sendefrequenz erzielt wird.

Die Erfindung bezieht sich auch auf eine Lichtschranke, die zur Durchführung des erfindungsgemäßen Verfahrens ausgebildet ist und insbesondere eine Integriereinrichtung aufweist, durch die die Empfangssignale in aufeinander folgenden Integrationsfenstern integrierbar sind, um einen jeweiligen Integrationswert zu ermitteln, und die ferner eine Auswerteeinrichtung aufweist, durch die die ermittelten Integrationswerte mit einer erwarteten Folge von Sendelichtpulsen verglichen werden.

Weitere Ausführungsformen der Erfindung sind in den Unteransprüchen genannt.

Die Erfindung wird nachfolgend lediglich beispielhaft unter Bezugnahme auf die Zeichnungen erläutert.
- Fig. 1: zeigt ein Blockschaltbild einer Lichtschranke.
- Fig. 2: zeigt verschiedene Signalverläufe.
- Fig. 3 und 4: zeigen verschiedene Folgen von Sendelichtpulsen und zugehörigen Integrationswerten.

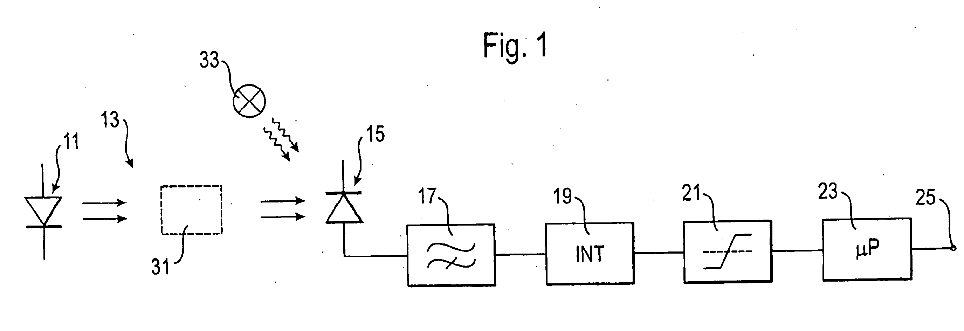

Fig. 1 zeigt schematisch den Aufbau einer erfindungsgemäßen Einweg-Lichtschranke. Diese besitzt einen Sender 11 (zum Beispiel Leuchtdiode), der entlang einer optischen Verbindungsstrecke 13 Sendelichtpulse in Richtung eines Empfängers 15 (zum Beispiel Photodiode) aussendet. Der Empfänger 15 erzeugt in Abhängigkeit von dem empfangenen Licht elektrische Empfangssignale, die an einen Hochpass 17 ausgegeben werden. Dieser bewirkt eine Niederfrequenz-Unterdrückung, um niederfrequente Störsignale herauszufiltern.

Die derartig gefilterten Empfangssignale werden einem Integrator 19 zugeführt. Dieser integriert die Empfangssignale in kontinuierlich erzeugten aufeinander folgenden Integrationsfenstern von bestimmter Dauer auf, um einen jeweiligen Integrationswert zu erzeugen. Eine derartige Integration kann beispielsweise in analoger Form mittels eines Kondensators erfolgen. Wichtig ist, dass die Integration zeitlich getaktet erfolgt, um die Empfangssignale unterteilt nach aufeinander folgenden Zeitintervallen aufzuintegrieren. Hierfür kann der Integrator 19 beispielsweise an einen Taktgeber angeschlossen sein (nicht gezeigt), der für ein regelmäßiges Rücksetzen des Integrators 19 sorgt.

Die somit ermittelten Integrationswerte werden nachfolgend diskretisiert. Hierfür ist in dem gezeigten Beispiel dem Integrator 19 ein Schwellwertschalter 21 nachgeschaltet, der eine Binarisierung der Integrationswerte bewirkt, indem die Integrationswerte mit einem vorbestimmten Schwellwert verglichen werden. An seinem Ausgang liefert der Schwellwertschalter 21 demzufolge bei Überschreiten oder Unterschreiten des Schwellwerts das Signal EINS bzw. NULL. Somit wird am Ausgang des Schwellwertschalters 21 im Takt der Integrationsfenster des Integrators 19 ein Bitstrom erzeugt. Anstelle einer derartigen Binarisierung ist auch eine Analog/ Digital-Wandlung möglich, also eine Umwandlung der Integrationswerte in mehr als zwei diskrete Ausgangswerte.

Dieser Bitstrom wird einer nachgeschalteten Auswerteeinrichtung 23 zugeführt, die in digitaler Ausgestaltung beispielsweise durch einen Mikroprozessor gebildet sein kann, wobei grundsätzlich auch eine analoge Ausführung möglich ist. Die Auswerteeinrichtung 23 korreliert die ermittelten Integrationswerte in der erläuterten binarisierten Form mit einer Signalfolge, die aufgrund der bekannten Ansteuerung des Senders 11 bei ungestörtem Empfang und freier optischer Verbindungsstrecke 13 erwartet wird. In Abhängigkeit von dem Ergebnis dieses Vergleichs erzeugt die Auswerteeinrichtung 23 an einem Schaltausgang 25 entweder ein positives Schaltsignal oder ein negatives Schaltsignal.

Die in Fig. 1 gezeigte Lichtschranke dient zur Erkennung von Hindernissen, wenn diese die optische Verbindungsstrecke 13 (Überwachungsbereich der Lichtschranke) durchqueren und somit den Empfang der Sendelichtpulse des Senders 11 unterbrechen. Hierbei sollen Fehldetektionen vermieden werden, die insbesondere durch die optischen Signale von Störlichtquellen 33 in der Umgebung der Lichtschranke resultieren können.

Beispielsweise muss vermieden werden, dass trotz des Vorhandenseins eines Hindernisses 31 entlang der optischen Verbindungsstrecke 13 ein optisches Signal einer intermittierend abstrahlenden Störlichtquelle 33 mit einem Sendelichtpuls des Senders 11 verwechselt wird und somit fälschlicherweise von einem freien Überwachungsbereich ausgegangen wird. Um derartige Effekte zu vermeiden, ist es erforderlich, den Empfänger 15 bzw. die zugeordnete Auswerteeinrichtung 23 mit dem Sender 11 zu synchronisieren, d.h. die Empfangssignale des Empfängers 15 müssen "echten" Sendelichtpulsen des Senders 11 zuverlässig zugeordnet und von Störlichtsignalen unterschieden werden können.

Zu diesem Zweck werden die Empfangssignale des Empfängers 15, wie bereits erläutert, gemäß aufeinander folgenden Integrationsfenstern konstanter Länge aufintegriert, nachfolgend binarisiert und anschließend - in Form eines Bitstroms - mit einer erwarteten Folge von empfangenen Sendelichtpulsen verglichen, wobei auch an sich bekannte Korrelierungsverfahren zur Anwendung gelangen können. Generell wird an dem Schaltausgang 25 der Auswerteeinrichtung 23 ein positives Schaltsignal ausgegeben, wenn dieser Vergleich eine vorbestimmte Mindestübereinstimmung zwischen den ermittelten Integrationswerten einerseits und der erwarteten (bekannten) Folge von Sendelichtpulsen andererseits ergibt, wobei im Falle eines negativen Prüfergebnisses ein negatives Schaltsignal ausgegeben wird.

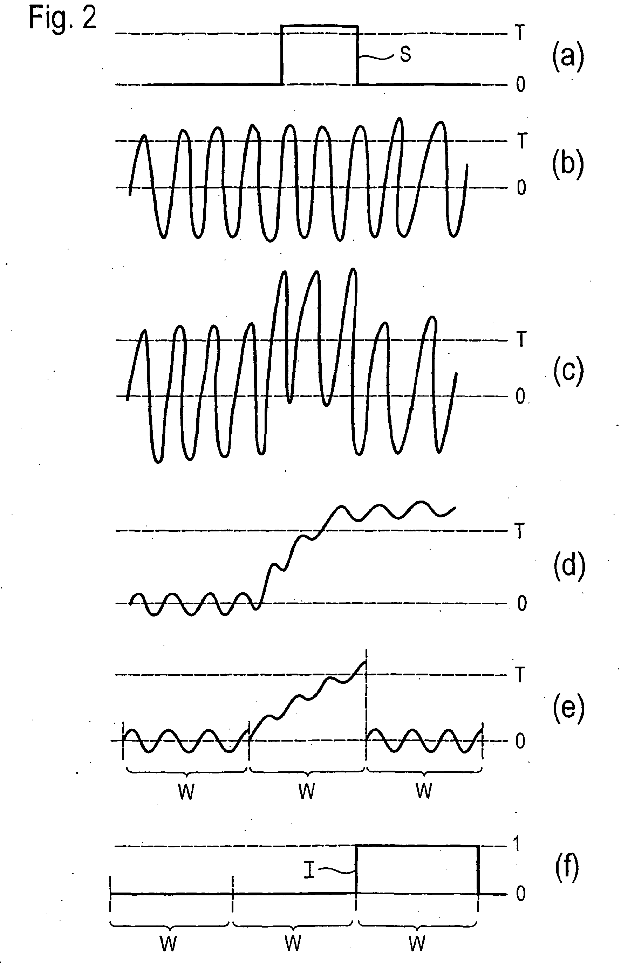

Nachfolgend soll anhand von Fig. 2 die Signalverarbeitung innerhalb der Lichtschranke gemäß Fig. 1 näher erläutert werden.

Fig. 2 zeigt in einem Diagramm (a) einen Sendelichtpuls S, der von dem Sender 11 gemäß Fig. 1 für eine vorbestimmte Sendepulsdauer ausgesendet wird.

Ferner zeigt Fig. 2 in Diagramm (b) ein hochfrequentes Störsignal, das von dem Empfänger 15 gemäß Fig. 1 empfangen, verstärkt und weitergeleitet wird. Dieses Störsignal überschreitet ständig einen Schwellwert T, so dass ein Vergleich des Empfangssignals des Empfängers 15 mit diesem Schwellwert T ersichtlich zu Fehldetektionen führen würde.

Dieses Problem zeigt sich insbesondere aufgrund des Diagramms (c) gemäß Fig. 2, das die Summe des Sendelichtpulses S gemäß Diagramm (a) und des Störsignals gemäß Diagramm (b) illustriert. Während der Dauer des Sendelichtpulses unterschreitet das Summensignal den Schwellwert T sogar zeitweise, und vor sowie nach Empfang des Sendelichtpulses S wird der Schwellwert T zeitweilig überschritten.

Diagramm (d) gemäß Fig. 2 illustriert den Effekt einer Integration des Summensignals gemäß Diagramm (c).

Falls eine derartige Integration in aufeinander folgenden Integrationsfenstern von geeigneter Länge durchgeführt wird, können die vorstehend erläuterten nachteiligen Effekte eines hochfrequenten Störsignals vermieden werden. Diagramm (e) gemäß Fig. 2 zeigt eine derartige Integration des Empfangssignals in drei aufeinander folgenden Integrationsfenstern W. Das gezeigte Signal entspricht also dem Ausgang des Integrators 19 gemäß Fig. 1. Während der Dauer des mittleren Integrationsfensters W wird ein Schwellwert T entsprechend dem Empfang eines Sendelichtpulses S überschritten.

Sofern die für die einzelnen Integrationsfenster W ermittelten Integrationswerte I durch Vergleich mit dem Schwellwert T binarisiert werden (Ausgangssignal des Schwellwertschalters 21 gemäß Fig. 1), ergibt sich eine Signalfolge (Bitstrom), wie in Diagramm (f) gemäß Fig. 2 gezeigt. Die gezeigten EINS- bzw. NULL-Signale am Ausgang des Schwellwertschalters 21 sind bezüglich der zugeordneten Integrationsfenster W gemäß Diagramm (e) um die Dauer eines Integrationsfensters W zeitversetzt, da der Schwellwertvergleich erst nach erfolgter Integration erfolgen kann.

Eine derartige Folge von ermittelten (binarisierten) Integrationswerten kann mit einer erwarteten Folge von Sendelichtpulsen verglichen werden, um in Abhängigkeit von dem Ergebnis dieses Vergleichs ein positives oder negatives Schaltsignal zu erzeugen.

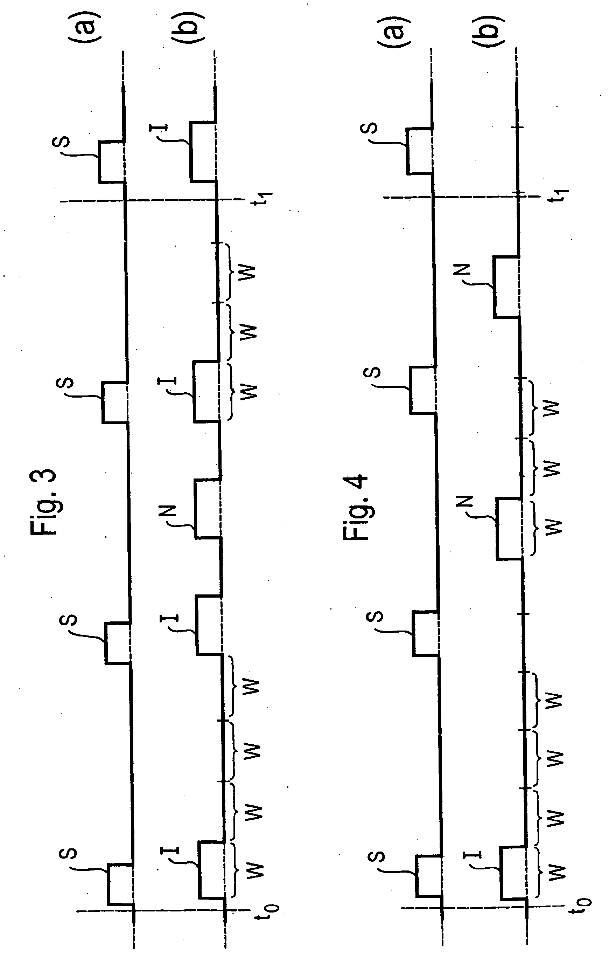

So zeigt Fig. 3 in einem Diagramm (a) eine erwartete Folge von (äquidistanten) Sendelichtpulsen S. In Diagramm (b) zeigt Fig. 3 die tatsächlich ermittelten Empfangssignale I nach Integration in den aufeinander folgenden Integrationsfenstern W und nach anschließender Binarisierung. Zusätzlich enthält die gezeigte Folge von ermittelten Integrationswerten auch einen Störsignalpuls N. Dieser ist durch Vergleich mit der erwarteten Folge von Sendelichtpulsen S gemäß Diagramm (a) von Fig. 3 jedoch als solcher identifizierbar.

Fig. 4 zeigt in Diagramm (a) ebenfalls eine erwartete Folge von Sendelichtpulsen S. In Diagramm (b) gemäß Fig. 4 ist ein einziger binarisierter Integrationswert I eines Empfangssignals gezeigt. In diesem Beispiel wurden nachfolgend aufgrund einer Unterbrechung der optischen Verbindungsstrecke 13 durch ein Hindernis 31 (Fig. 1) keine weiteren Sendesignalpulse mehr empfangen. Allerdings wurde hier der Empfänger 15 von Störlicht beaufschlagt, das zu der Erzeugung von Störsignalpulsen N führte. Diese können durch Korrelierung der gezeigten Folge mit der Pulsfolge gemäß Diagramm (a) nach Fig. 4 jedoch erkannt werden, um eine Fehldetektion zu vermeiden.

Eine derartige Korrelierung von ermittelten Integrationswerten mit einer erwarteten Folge von Sendelichtpulsen kann beispielsweise dahingehend erfolgen, dass nur dann von einem negativen zu einem positiven Schaltsignal umgeschaltet wird, wenn innerhalb eines vorbestimmten Zeitintervalls (zum Beispiel Zeitintervall t₀ bis t₁ gemäß Fig. 3 und 4) für sämtliche Integrationsfenster W, für die ein Sendelichtpuls S erwartet werden muss, die ermittelten Integrationswerte I tatsächlich einem empfangenen Sendelichtpuls S entsprechen. Dies entspricht der Bedingung, dass nur dann ein positives Schaltsignal ausgegeben wird, wenn in dem Bitstrom nur die Werte EINS an den korrekten Stellen vorhanden sind. Zusätzlich kann hierbei berücksichtigt werden, dass ein negatives Schaltsignal jedoch beibehalten wird und die ermittelten Integrationswerte I für ein verlängertes Zeitintervall oder für ein neues vorbestimmtes Zeitintervall ausgewertet werden, falls innerhalb des genannten vorbestimmten Zeitintervalls (to bis ti) die Anzahl von Integrationswerten I, die einem empfangenen Sendelichtpuls S entsprechen, größer ist als ein vorbestimmter Schwellwert (vgl. Diagramm (b) gemäß Fig. 3). Mit anderen Worten würde eine zu große Anzahl des Wertes EINS in dem erzeugten Bitstrom anzeigen, dass eine Störung vorhanden ist, und es würde über einen größeren Zeitraum auf Plausibilität geprüft werden. Aufgrund der erläuterten zusätzlichen Bedingung würde also bei Vorliegen eines Störsignals ein zu frühes Umschalten auf ein positives Schaltsignal vermieden werden.

Weiterhin kann zur Auswertung eines erzeugten Bitstroms vorgesehen sein, dass nur dann von einem positiven zu einem negativen Schaltsignal umgeschaltet wird, wenn innerhalb eines vorbestimmten Zeitintervalls (zum Beispiel t₀ bis t₁) für kein einziges Integrationsfenster W, für das ein Sendelichtpuls S erwartet wird, der tatsächlich ermittelte Integrationswert 1 einem empfangenen Sendelichtpuls S entspricht. Hierdurch wird ein zu frühes Umschalten auf ein negatives Schaltsignal vermieden.

Bezüglich der Dauer eines Integrationsfensters W relativ zu der Sendepulsdauer der Sendelichtpulse S bestehen beispielsweise die folgenden Möglichkeiten:
(1) Die Dauer eines Integrationsfensters W kann beispielsweise um einen Faktor i größer sein als die Sendepulsdauer, wobei in diesem Fall die Empfangssignale in mehreren, nämlich i Folgen von aufeinander folgenden Integrationsfenstern W integriert werden, und wobei diese i Folgen um einen Bruchteil 1/i der Dauer eines Integrationsfensters W zueinander versetzt sind. Mit anderen Worten würden bei dieser Variante mehrere Auswertungen parallel erfolgen. Der Vorteil dieser Variante besteht darin, dass unabhängig von der Phasenlage der Integrationsfenster W der empfangene Sendelichtpuls zumindest in einer der mehreren Auswertungen vollständig innerhalb eines Integrationsfensters W aufintegriert wird.
   Vorzugsweise wird als Faktor i = 2 gewählt, d.h. die Dauer eines Integrationsfensters W entspricht ungefähr der doppelten Sendepulsdauer, und die Empfangssignale werden in zwei Folgen von Integrationsfenstern W aufintegriert, die um die Hälfte der Dauer eines Integrationsfensters W zueinander versetzt sind. Die hieraus resultierenden zwei parallel erzeugten Bitströme können entweder unabhängig voneinander, d.h. parallel zueinander jeweils mit der erwarteten Folge von Sendelichtpulsen S korreliert werden, oder diese beiden Bitströme werden erst zu einem einzigen Bitstrom zusammengefasst und anschließend mit der erwarteten Folge von Sendelichtpulsen S korreliert.
(2) Alternativ hierzu kann die Dauer eines Integrationsfensters W ungefähr der Sendepulsdauer entsprechen, wobei bei dieser Variante die Integrationswerte I von zwei jeweils, aufeinander folgenden Integrationsfenstern W addiert werden, um eine Summenwertfolge (Bitstrom) zu bilden, die mit der erwarteten Folge von Sendelichtpulsen S verglichen wird (zum Beispiel I₁ + I₂, dann I₂ + I₃, dann I₃ + I₄ etc.). Auch hierdurch wird erreicht, dass innerhalb der gebildeten Summenwertfolge ein erfasster Sendelichtpuls stets vollständig enthalten ist. Vorzugsweise erfolgt ein Schwellwertvergleich hier für jeden gebildeten Summenwert (d.h. nach der erfolgten Summenwertbildung), um hierdurch einen Bitstrom zu erzeugen.
   Fehler der realen Integration (zum Beispiel Offsetfehler des Integrators) können dazu führen, dass in jedem Integrationsfenster W ein konstanter Offset vorhanden ist. Daher ist es für diese und auch für die vorgenannte Variante (1) bevorzugt, wenn das Integrationsergebnis mit dem Integrationsergebnis anderer Fenster W, die kein Signal eines Sendelichtpulses S enthalten, verglichen wird. Dies wird insbesondere dadurch realisiert, dass von dem Integrationsergebnis der Integrationswert I des vorherigen und/oder des nachfolgenden Integrationsfensters W subtrahiert wird.
(3) Außerdem ist es beispielsweise möglich, dass die Dauer eines Integrationsfensters W lediglich einem Bruchteil 1/m der Sendepulsdauer entspricht, wobei für m vorzugsweise ein ganzzahliger positiver Wert gewählt wird. Insbesondere beträgt die Dauer eines Integrationsfensters W ungefähr die Hälfte der Sendepulsdauer. Hierdurch ist stets ein Integrationsfenster W vorhanden, für dessen gesamte Dauer das Signal eines empfangenen Sendelichtpulses vorhanden ist. Somit ist auch hier eine Schwankung des ermittelten Integrationswerts in Abhängigkeit von der Sendephase nicht vorhanden.

Anders als bei den Varianten (1) und (2) wird eine Offseteliminierung hier durch einen Vergleich mit einem Integrationsfenster W erreicht, das nicht unmittelbar benachbart zu dem betrachteten Integrationsfenster W liegt.

### Bezugszeichenliste

- 11: Sender
- 13: optische Verbindungsstrecke
- 15: Empfänger
- 17: Hochpass
- 19: Integrator
- 21: Schwellschwertschalter
- 23: Auswerteeinrichtung
- 25: Schaltausgang
- 31: Hindernis
- 33: Störlichtquelle

- I: binarisierter Integrationswert eines Empfangssignals
- N: Störsignalpuls
- S: Sendesignalpuls
- T: Schwellwert
- t₀ bis t₁: Zeitintervall
- W: Integrationsfenster

## Patentansprüche

1. Verfahren zum Synchronisieren eines Empfängers (15) einer Lichtschranke mit einem Sender (11) der Lichtschranke, wobei der Sender (11) Sendelichtpulse aussendet und der Empfänger (15) die Sendelichtpulse empfängt und entsprechende elektrische Empfangssignale erzeugt,
**dadurch gekennzeichnet,**
**dass** die Empfangssignale in aufeinander folgenden Integrationsfenstern (W) integriert werden, um einen jeweiligen Integrationswert (I) zu ermitteln, wobei eine Folge von den ermittelten Integrationswerten mit einer erwarteten Folge von Sendelichtpulsen verglichen werden.

2. Verfahren nach Anspruch 1,
**dadurch gekennzeichnet,**
**dass** in Abhängigkeit von dem Ergebnis des Vergleichs der Folge von den ermittelten Integrationswerten mit der erwarteten Folge von Sendelichtpulsen ein positives oder ein negatives Schaltsignal erzeugt wird.

3. Verfahren nach einem der vorhergehenden Ansprüche,
**dadurch gekennzeichnet,**
**dass** die ermittelten Integrationswerte (I) vor dem Vergleich mit der erwarteten Folge von Sendelichtpulsen diskretisiert werden.

4. Verfahren nach einem der vorhergehenden Ansprüche,
**dadurch gekennzeichnet,**
**dass** die ermittelten Integrationswerte (I) durch einen Vergleich mit einem Schwellwert (T) binarisiert werden.

5. Verfahren nach einem der vorhergehenden Ansprüche,
**dadurch gekennzeichnet,**
**dass** für den Vergleich der Folge von den ermittelten Integrationswerten mit der erwarteten Folge von Sendelichtpulsen diese Folge von ermittelten Integrationswerten relativ zu der erwarteten Folge von Sendelichtpulsen verschoben wird, um einen jeweiligen Übereinstimmungsgrad zu bestimmen.

6. Verfahren nach einem der vorhergehenden Ansprüche,
**dadurch gekennzeichnet,**
**dass** in dem Fall, dass der Vergleich der Folge von den ermittelten Integrationswerten mit der erwarteten Folge von Sendelichtpulsen eine vorbestimmte Mindestübereinstimmung ergibt, ein positives Schaltsignal und andernfalls ein negatives Schaltsignal erzeugt wird.

7. Verfahren nach einem der vorhergehenden Ansprüche,
**dadurch gekennzeichnet,**
**dass** nur dann von einem negativen zu einem positiven Schaltsignal umgeschaltet wird, wenn innerhalb eines vorbestimmten Zeitintervalls (t₀ bis t₁) für sämtliche Integrationsfenster (W), für die ein Sendelichtpuls erwartet wird, die ermittelten Integrationswerte (I) einem empfangenen Sendelichtpuls entsprechen,
wobei jedoch in dem Fall, dass innerhalb des vorbestimmten Zeitintervalls (to bis t₁) die Anzahl der Integrationswerte, die einem empfangenen Sendelichtpuls entsprechen, größer ist als ein Schwellwert, das negative Schaltsignal beibehalten wird und die ermittelten Integrationswerte für ein verlängertes Zeitintervall oder für ein neues vorbestimmtes Zeitintervall ausgewertet werden.

8. Verfahren nach einem der vorhergehenden Ansprüche,
**dadurch gekennzeichnet,**
**dass** nur dann von einem positiven zu einem negativen Schaltsignal umgeschaltet wird, wenn innerhalb eines vorbestimmten Zeitintervalls (t₀ bis t₁) für kein einziges Integrationsfenster (W), für das ein Sendelichtpuls erwartet wird, der ermittelte Integrationswert einem empfangenen Sendelichtpuls entspricht.

9. Verfahren nach einem der vorhergehenden Ansprüche,
**dadurch gekennzeichnet,**
**dass** in dem Fall, dass bereits ein positives Schaltsignal vorliegt, für das Beibehalten des positiven Schaltsignals eine andere Regel berücksichtigt wird als für ein Umschalten von einem negativen Schaltsignal auf ein positives Schaltsignal.

10. Verfahren nach einem der vorhergehenden Ansprüche,
**dadurch gekennzeichnet,**
**dass** in dem Fall, dass bereits ein negatives Schaltsignal vorliegt, für das Beibehalten des negativen Schaltsignals eine andere Regel berücksichtigt wird als für ein Umschalten von einem positiven Schaltsignal auf ein negatives Schaltsignal.

11. Verfahren nach einem der vorhergehenden Ansprüche,
**dadurch gekennzeichnet,**
**dass** die jeweilige Dauer der Integrationsfenster (W) ungefähr der Sendepulsdauer entspricht,
wobei die Dauer eines Integrationsfensters insbesondere einem Wert aus einem Bereich von einem Viertel bis dem Vierfachen der Sendepulsdauer entspricht.

12. Verfahren nach einem der vorhergehenden Ansprüche,
**dadurch gekennzeichnet,**
**dass** die Dauer eines Integrationsfensters (W) der Sendepulsdauer, der Hälfte der Sendepulsdauer oder der doppelten Sendepulsdauer entspricht.

13. Verfahren nach einem der vorhergehenden Ansprüche,
**dadurch gekennzeichnet,**
**dass** die Dauer eines Integrationsfensters (W) ungefähr der mit einem ganzzahligen Faktor i multiplizierten Sendepulsdauer entspricht, wobei die Empfangssignale in i Folgen von aufeinander folgenden Integrationsfenstern integriert werden, wobei die i Folgen um einen Bruchteil 1/i der Dauer eines Integrationsfensters zueinander versetzt sind, und wobei vorzugsweise i = 2 ist.

14. Verfahren nach einem der Ansprüche 1 bis 12,
**dadurch gekennzeichnet,**
**dass** die Dauer eines Integrationsfensters (W) der Sendepulsdauer entspricht, wobei die Integrationswerte von wenigstens zwei jeweils aufeinander folgenden Integrationsfenstern addiert werden, um anhand der Integrationswerte (I) eine Summenwertfolge zu bilden, die mit der erwarteten Folge von Sendelichtpulsen verglichen wird.

15. Verfahren nach einem der Ansprüche 1 bis 12,
**dadurch gekennzeichnet,**
**dass** die Dauer eines Integrationsfensters (W) ungefähr einem ganzzahligen Bruchteil 1/m der Sendepulsdauer entspricht.

16. Verfahren nach einem der vorhergehenden Ansprüche,
**dadurch gekennzeichnet,**
**dass** die Frequenz, mit der die aufeinander folgenden Integrationsfenster (W) erzeugt werden, einem ganzzahligen Vielfachen der Aussendefrequenz der Sendelichtpulse entspricht.

17. Verfahren nach einem der vorhergehenden Ansprüche,
**dadurch gekennzeichnet,**
**dass** die Empfangssignale vor der Integration Hochpass-gefiltert werden.

18. Verfahren nach einem der vorhergehenden Ansprüche,
**dadurch gekennzeichnet,**
**dass** das Synchronisieren des Empfängers (15) mit dem Sender (11) während der gesamten Dauer eines Überwachungsbetriebs der Lichtschranke erfolgt.

19. Lichtschranke, insbesondere zur Durchführung des Verfahrens nach einem der vorhergehenden Ansprüche, mit:
- wenigstens einem Sender (11) zum Aussenden von Sendelichtpulsen, und
- einem Empfänger (15) zum Empfangen der Sendelichtpulse und zum Erzeugen entsprechender elektrischer Empfangssignale,
**gekennzeichnet durch**
- eine Integriereinrichtung (19), **durch** die die Empfangssignale in aufeinander folgenden Integrationsfenstern (W) integrierbar sind, um einen jeweiligen Integrationswert (I) zu ermitteln, und
- eine Auswerteeinrichtung (23), **durch** die die Folge von den ermittelten Integrationswerten mit einer erwarteten Folge von Sendelichtpulsen vergleichbar sind.

20. Lichtschranke nach Anspruch 19,
**gekennzeichnet durch**
einen Komparator (21), **durch** den die ermittelten Integrationswerte vor dem Vergleich mit der erwarteten Folge von Sendelichtpulsen mit einem Schwellwert vergleichbar sind, um die ermittelten Integrationswerte zu binarisieren.

## Claims

1. A method for the synchronisation of a receiver (15) of a light barrier with a transmitter (11) of the light barrier, wherein the transmitter (11) transmits transmitted light pulses and the receiver (15) receives the transmitted light pulses and generates corresponding electrical received signals,
**characterised in that**
the received signals are integrated in mutually following integration windows (W) to determine a respective integration value (I), with a sequence of the determined integration values being compared with an expected sequence of transmitted light pulses.

2. A method in accordance with claim 1, **characterised in that** a positive or a negative switching signal is generated in dependence on the result of the comparison of the sequence of the determined integration values with the expected sequence of transmitted light pulses.

3. A method in accordance with one of the preceding claims, **characterised in that** the determined integration values (I) are discretised before the comparison with the expected sequence of transmitted light pulses.

4. A method in accordance with any one of the preceding claims, **characterised in that** the determined integration values (I) are binarised by a comparison with a threshold value (T).

5. A method in accordance with any one of the preceding claims, **characterised in that**, for the comparison of the sequence of the determined integration values with the expected sequence of transmitted light pulses, this sequence of determined integration values is displaced relative to the expected sequence of transmitted light pulses to determine a respective degree of coincidence.

6. A method in accordance with any one of the preceding claims, **characterised in that** a positive switching signal is generated in the event that the comparison of the sequence of the determined integration values with the expected sequence of transmitted light pulses produces a preset minimum coincidence and otherwise a negative switching signal is generated.

7. A method in accordance with any one of the preceding claims, **characterised in that** a switch is only made from a negative switching signal to a positive switching signal when the determined integration values (I) correspond to a received transmitted light pulse within a preset time interval (to to t₁) for all integration windows (W) for which a transmitted light pulse is expected, wherein, however, in the event that the number of integration values which correspond to a received transmitted light pulse is larger than a threshold value within the preset time interval, the negative switching signal is maintained and the determined integration values are evaluated for an extended time interval or for a new preset time interval.

8. A method in accordance with any one of the preceding claims, **characterised in that** a switch is only made from a positive switching signal to a negative switching signal when within a predetermined time interval (to to t₁) the determined integration value does not correspond to a received transmitted light pulse for any single integration window (W) for which a transmitted light pulse is expected.

9. A method in accordance with any one of the preceding claims, **characterised in that**, in the event that a positive switching signal is already present, a different rule is taken into account for the maintenance of the positive switching signal than for a switching from a negative switching signal to a positive switching signal.

10. A method in accordance with any one of the preceding claims, **characterised in that**, in the event that a negative switching signal is already present, a different rule is taken into account for the maintenance of the negative switching signal than for a switching from a positive switching signal to a negative switching signal.

11. A method in accordance with any one of the preceding claims, **characterised in that** the respective duration of the integration windows (W) approximately corresponds to the transmitted pulse duration, with the duration of an integration window in particular corresponding to a value from a range from one quarter up to four times the transmitted pulse duration.

12. A method in accordance with any one of the preceding claims, **characterised in that** the duration of an integration window (W) of the transmitted pulse duration corresponds to half the transmitted pulse duration or twice the transmitted pulse duration.

13. A method in accordance with any one of the preceding claims, **characterised in that** the duration of an integration window (W) approximately corresponds to the transmitted pulse duration multiplied by a whole number factor i, with the received signals being integrated in i sequences of integration windows following one another, with the i sequences being offset with respect to one another by a fraction 1 / i of the duration of an integration window, and where preferably i = 2.

14. A method in accordance with any one of the claims 1 to 12, **characterised in that** the duration of an integration window (W) corresponds to the transmitted pulse duration, with the integration values of at least two respective mutually following integration values being added to form a sum value sequence with reference to the integration values (I) which is compared with the expected sequence of transmitted light pulses.

15. A method in accordance with any one of the claims 1 to 12, **characterised in that** the duration of an integration window (W) approximately corresponds to a whole number fraction 1/m of the transmitted light duration.

16. A method in accordance with any one of the preceding claims, **characterised in that** the frequency with which the mutually following integration windows (W) are generated corresponds to a whole number multiple of the transmission frequency of the transmitted light pulses.

17. A method in accordance with any one of the preceding claims, **characterised in that** the received signals are high pass filtered before the integration.

18. A method in accordance with any one of the preceding claims, **characterised in that** the synchronisation of the receiver (15) with the transmitter (11) takes place during the whole duration of a monitoring operation of the light barrier.

19. A light barrier, in particular for the carrying out of the method in accordance with any one of the preceding claims, comprising:
- at least one transmitter (11) for the transmission of transmitted light pulses; and
- a receiver (15) for the reception of the transmitted light pulses and for the generation of corresponding electrical received signals,
**characterised by**
- an integration device (19) by which the received signals can be integrated in mutually following integration windows (W) to determine a respective integration value (I); and
- an evaluation device (23) by which the sequence of the determined integration values can be compared with an expected sequence of transmitted light pulses.

20. A light barrier in accordance with claim 19, **characterised by** a comparator (21) by which the determined integration values can be compared with a threshold value before the comparison with the expected sequence of transmitted light pulses to binarise the determined integration values.

## Revendications

1. Procédé pour synchroniser un récepteur (15) d'une barrière lumineuse avec un émetteur (11) de la barrière lumineuse, dans lequel l'émetteur (11) émet des impulsions de lumière émises et le récepteur (15) reçoit les impulsions de lumière émises et génère des signaux de réception électriques correspondants,
**caractérisé en ce que**
les signaux de réception sont intégrés dans des fenêtres d'intégration (W) qui se suivent les unes les autres, pour déterminer une valeur d'intégration respective (I), dans lequel une succession des valeurs d'intégration déterminées sont comparées avec une succession attendue d'impulsions de lumière émises.

2. Procédé selon la revendication 1,
**caractérisé en ce que**, en fonction du résultat de la comparaison de la succession des valeurs d'intégration déterminées avec la succession attendue d'impulsions de lumière émises, on génère un signal de commutation positif ou un signal de commutation négatif.

3. Procédé selon l'une des revendications précédentes,
**caractérisé en ce que** les valeurs d'intégration déterminées (I) sont transformées en valeurs discrètes avant la comparaison avec la succession attendue d'impulsions de lumière émises.

4. Procédé selon l'une des revendications précédentes,
**caractérisé en ce que** les valeurs d'intégration déterminées (I) sont mises sous forme binaire par une comparaison avec une valeur seuil (T).

5. Procédé selon l'une des revendications précédentes,
**caractérisé en ce que** pour la comparaison de la succession des valeurs d'intégration déterminées avec la succession attendue d'impulsions de lumière émises, cette succession de valeurs d'intégration déterminées est déplacée par rapport à la succession attendue d'impulsions de lumière émises, afin de déterminer un degré de coïncidence respectif.

6. Procédé selon l'une des revendications précédentes,
**caractérisé en ce que**, dans le cas où la comparaison de la succession des valeurs d'intégration déterminées avec la succession attendue d'impulsions de lumière émises donne en résultat une coïncidence minimum prédéterminée, on génère un signal de commutation positif, sinon on génère un signal de commutation négatif.

7. Procédé selon l'une des revendications précédentes,
**caractérisé en ce que** l'on procède à une inversion d'un signal de commutation négatif vers un signal de commutation positif uniquement si, à l'intérieur d'un intervalle temporel prédéterminé (t0 à t1) pour la totalité des fenêtres d'intégration (W) pour lesquelles une impulsion de lumière émise est attendue, les valeurs d'intégration déterminées (I) correspondent à une impulsion de lumière émise reçue,
dans lequel, dans le cas où à l'intérieur de l'intervalle temporel prédéterminé (t0 à t1), le nombre des valeurs d'intégration qui correspondent à une impulsion de lumière émise reçue est supérieur à une valeur seuil, on conserve cependant le signal de commutation négatif et les valeurs d'intégration déterminés pour un intervalle temporel prolongé ou pour un nouvel intervalle temporel prédéterminé sont exploitées.

8. Procédé selon l'une des revendications précédentes,
**caractérisé en ce que** l'on procède à une inversion d'un signal de commutation positif vers un signal de commutation négatif uniquement si à l'intérieur d'un intervalle temporel prédéterminé (t0 à t1) la valeur d'intégration déterminée correspond à une impulsion de lumière émise pour aucune fenêtre d'intégration (W) pour laquelle une impulsion de lumière émise est attendue.

9. Procédé selon l'une des revendications précédentes,
**caractérisé en ce que**, dans le cas où on est déjà en présence d'un signal de commutation positif, on prend en compte une autre règle pour le maintien du signal de commutation positif que pour une inversion d'un signal de commutation négatif vers un signal de commutation positif.

10. Procédé selon l'une des revendications précédentes,
**caractérisé en ce que**, dans le cas où on est déjà en présence d'un signal de commutation négatif, on prend en compte une autre règle pour le maintien du signal de commutation négatif que pour une inversion d'un signal de commutation positif vers un signal de commutation négatif.

11. Procédé selon l'une des revendications précédentes,
**caractérisé en ce que** la durée respective de la fenêtre d'intégration (W) correspond approximativement à la durée des impulsions émises,
dans lequel la durée d'une fenêtre intégration correspond en particulier à une valeur dans une plage allant d'un quart au quadruple de la durée des impulsions émises.

12. Procédé selon l'une des revendications précédentes,
**caractérisé en ce que** la durée d'une fenêtre d'intégration (W) correspond à la durée des impulsions émises, à la moitié de la durée des impulsions émises, ou au double de la durée des impulsions émises.

13. Procédé selon l'une des revendications précédentes,
**caractérisé en ce que** la durée d'une fenêtre d'intégration (W) correspond approximativement à la durée des impulsions émises multipliée par un facteur entier i, et dans lequel les signaux de réception sont intégrés dans i successions de fenêtres d'intégration qui se suivent les unes les autres, et les i successions sont décalées les unes par rapport aux autres d'une fraction 1/i de la durée d'une fenêtre d'intégration, i étant de préférence égal à 2.

14. Procédé selon l'une des revendications 1 à 12,
**caractérisé en ce que** la durée d'une fenêtre d'intégration (W) correspond à la durée des impulsions émises, les valeurs d'intégration d'au moins deux fenêtres d'intégration qui se suivent respectivement sont additionnées, afin de former une succession de valeurs sommes au moyen des valeurs d'intégration (I), cette succession étant comparée avec la succession attendue d'impulsions de lumière émises.

15. Procédé selon l'une des revendications 1 à 12,
**caractérisé en ce que** la durée d'une fenêtre d'intégration (W) correspond approximativement à une fraction entière 1/m de la durée des impulsions émises.

16. Procédé selon l'une des revendications précédentes,
**caractérisé en ce que** la fréquence avec laquelle les fenêtres d'intégration (W) qui se suivent les unes les autres sont générées, correspond à un multiple entier de la fréquence d'émission des impulsions de lumière émises.

17. Procédé selon l'une des revendications précédentes,
**caractérisé en ce que** les signaux de réception sont soumis à un filtre passent-haut avant l'intégration.

18. Procédé selon l'une des revendications précédentes,
**caractérisé en ce que** la synchronisation du récepteur (15) avec l'émetteur (11) a lieu pendant la totalité de la durée d'un fonctionnement de la barrière lumineuse en surveillance.

19. Barrière lumineuse, en particulier pour la mise en oeuvre du procédé selon l'une des revendications précédentes, comprenant :
- au moins un émetteur (11) pour émettre des impulsions de lumière émises, et
- un récepteur (15) pour recevoir les impulsions de lumière émises et pour générer des signaux de réception électriques correspondants,
**caractérisée par**
- un moyen d'intégration (19) au moyen duquel les signaux de réception peuvent être intégrés dans des fenêtres d'intégration qui se suivent les unes les autres (W) afin de déterminer une valeur d'intégration respective (I), et
- un moyen d'évaluation (23) au moyen duquel la succession des valeurs d'intégration déterminées peuvent être comparées avec une succession attendue d'impulsions de lumière émises.

20. Barrière lumineuse selon la revendication 19,
**caractérisée par** un comparateur (21) au moyen duquel les valeurs d'intégration déterminées peuvent être comparées avec une valeur seuil avant la comparaison avec la succession attendue d'impulsions de lumière émises, afin de transformer les valeurs d'intégration déterminées en valeurs binaires.
